Europäisches Patentamt

(19) European Patent Office

Office européen des brevets

(11) Publication number: **0 067 674**
**B1**

# (12) EUROPEAN PATENT SPECIFICATION

(45) Date of publication of patent specification: **01.10.86**

(21) Application number: **82303008.5**

(22) Date of filing: **10.06.82**

(51) Int. Cl.⁴: **C 08 J 9/06,** C 08 K 3/38,
C 08 K 3/36

(54) Production of cellular thermoplastic resinous material.

(30) Priority: **12.06.81 US 272867**

(43) Date of publication of application:
**22.12.82 Bulletin 82/51**

(45) Publication of the grant of the patent:
**01.10.86 Bulletin 86/40**

(84) Designated Contracting States:
**AT BE CH DE FR GB IT LI NL SE**

(56) References cited:
**US-A-3 167 520**
**US-A-3 511 787**

(73) Proprietor: **MORTON THIOKOL, INC.**
**110 North Wacker Drive**
**Chicago Illinois 60606 (US)**

(72) Inventor: **Wade, Robert C.**
**61 S. Village Green**
**Ipswich Massachusetts 01938 (US)**

(74) Representative: **Warren, Anthony Robert et al**
**BARON & WARREN 18 South End Kensington**
**London W8 5BU (GB)**

Courier Press, Leamington Spa, England.

## Description

This invention relates to the production of cellular thermoplastic resinous material from a thermoplastic resin and a blowing agent.

The use of alkali metal borohydrides such as sodium borohydride and potassium borohydride as blowing agents in connection with the production of cellular articles is well known. For example US—A—2951819 discloses the use of an alkali metal borohydride in connection with the manufacture of cellular articles. US—A—3167520 relates to cellular articles prepared from polystyrene by extruding polystyrene resin containing an alkali metal borohydride which decomposes during extrusion to form a cellular article. This invention is directed to an improvement in the technique of the aforesaid United States Patent No. 3167520.

The present invention consists in a method of making a cellular thermoplastic resinous material from thermoplastic resin and a blowing agent characterised by preparing a mixture of (i) a thermoplastic resinous polymer, (ii) alkali metal borohydride in the form of a powder or of a concentrate consisting essentially of 0.5 to 20.0% by weight of alkali metal borohydride, not more than 0.1% of adsorbed water, the balance being essentially inert thermoplastic resinous polymer and (iii) an effective amount of an activating agent comprising a finely divided carrier of high surface area having a proton source adsorbed upon its surface and heating said mixture until said thermoplastic resin is in molten condition so as to hydrolyse said alkali metal borohydride with consequent foaming of said molten resin and production of a cellular structure.

The borohydride concentrate when used should contain not more than about 0.1% of adsorbed water or the borohydride will hydrolyze. Such water may be adsorbed upon the surface of the borohydride and/or upon the surface of the resinous polymer.

The concentrates used in this preferred method may be made by dry blending from 0.5% to 20% by weight of powdered alkali metal borohydride with a dry inert thermoplastic resinous polymer to form a mixture containing not more than 0.1% by weight of water; heating the dry blended mixture to a temperature above that of the melting point of the resin to form a molten mixture; extruding the molten mixture and then cooling the extrudate to form a solid, stable concentrate; and then forming the cooled extruded concentrate into pellets by conventional techniques such as chopping or grinding.

One embodiment of the invention comprises contacting a mixture of alkali metal borohydride and thermoplastic resinous polymer with a high surface area silica activating agent having said proton source adsorbed upon its surface. The alkali metal borohydride may be in the form of the concentrate described above or as neat powdered alkali metal borohydride.

The above described concentrates may be used to incorporate low levels of alkali metal borohydride into the same or different resins with the object of utilising the incorporated borohydride to foam the resin when the additional proton-providing activator is also added to the resin to react with the borohydride and liberate hydrogen.

When used as a blowing agent for thermoplastic resins, up to 0.5% of $NaBH_4$ may be incorporated into the resin from the concentrate. The preferred proportion is up to 0.25%.

The use of a concentrate to incorporate low levels of borohydride into the resins has several advantages.

First of all, the concentrates protect the borohydride from adventitious hydrolysis during handling and may be stored for periods of the order of a year without the occurrence of significant hydrolysis. Secondly, it is much easier to incorporate the borohydride at very low levels such as less than 1 wt.% into the resin by using such concentrates. Thirdly, overall handling such as weighing and making uniform mixtures is much easier using the concentrates than using neat borohydrides. Because such highly reactive material has been concentrated and rendered substantially inert, employee safety is enhanced. In addition, very uniform dispersions of borohydride in the resin are obtained using the concentrates.

The 0.5% lower limit for borohydride content in the concentrate is preferred primarily because lower concentrations necessarily involve the use of excessive amounts of the concentrate and the 20% upper limit is preferred because higher levels involve using excessively small amounts of the concentrate and thus hamper the attainment of a uniform dispersion of borohydride in the thermoplastic polymer to be foamed. It is preferred to include the alkali metal borohydride in amounts between 2 and 10% because such range permits let-down ratios of the order of about 20:1 as are normally desired in the industry. Sodium and potassium borohydrides are preferred for use in such concentrates. The concentrate should contain no more than about 0.1% by weight of adsorbed water, preferably not more than about 0.01%, in order to prevent hydrolysis of the borohydride. Thus, the borohydride and resin must be very dry when mixed to form the concentrate and moisture pick-up should be avoided during such mixing.

The inert resinous polymer component of the concentrate comprises a resin or resins from which reactive protonic hydrogen atoms are substantially absent. Such resins include polyolefins, polydienes, polystyrene, polyphenylene-oxide-styrene, polyacrylates, polyvinylchloride and polyvinylacetate.

Typical resinous polymers that may be foamed using the concentrate include but are not limited to polyolefins, polydienes, polystyrenes, polyphenyleneoxide-styrenes, polyacrylates, polyvinylchloride and polyvinylacetate.

Cellular articles may be manufactured by mixing the alkali metal borohydride concentrate described

2

above with a resinous polymer and an effective amount of the activating agent capable of donating acidic protons to the alkali metal borohydride so as to hydrolyse substantially all of the alkali metal borohydride whilst the resinous polymer is molten and thus form a cellular article. A preferred activating agent is finely divided high surface area silica.

An example of a form of silica suitable for use in the method of the invention is that manufactured by Cabot Corporation under the registered Trade Mark "CAB-O-SIL". Such type of silica is manufactured by fuming. It is preferred to utilize silica having a surface pH of less than 7 because acidic materials aid in the decomposition of alkali metal borohydrides. It is especially preferred to have a pH of 4 or lower. Finely divided, high surface area activating agents function to provide nucleation sites for foam to form. These materials have a very high capacity for adsorbing liquids such as water and yet remain a free-flowing solid and thus aid in the promotion of uniformity during the blending or mixing stage of the method.

Suitable proton sources include water, mineral acids, carboxylic acids, alcohols, sulfonic acids, polyacrylic acid and polystyrene sulfonic acid. Water is preferred due to its relatively low cost, availability, and low corrosivity.

It has also been found that the silica activators described above may be used in admixture with alkali metal borohydride materials other than the concentrates described above. For example, powdered alkali metal borohydrides may be used together with the silica activators to produce foamed polymers. As in the case of the concentrate additions, the alkali metal borohydride and a resinous polymer are contacted with a sufficient amount of activating agent to cause substantially all of the borohydride to hydrolyse.

The following preparations and examples further illustrate the invention.

Preparation of borohydride concentrates
Preparation A

Sodium borohydride was concentrated in polypropylene by the following procedure. Ninety parts by weight of previously dried, powdered, unstabilized polypropylene resin (melt index 12) and 10 parts by weight of $NaBH_4$ that was previously dried for 24 hours at 100°C, were thoroughly mixed in a dry blender. The resultant mixture was extruded through a 0.318 cms diameter die at about 450°F (232°C). The extruded rod was pelletized in line with the extruder. The extruded concentrate was examined with a low power microscope and an extremely uniform dispersion of minute borohydride particles was found. Virtually no gas bubbles were observed in the resin pellets.

Preparation B

Sodium borohydride was concentrated in NORYL® resins in the following manner. Ninety parts by weight of dry NORYL® resin FN 215, a proprietary General Electric Co. blend of polyphenylene oxide and polystyrene in pellet form, was mixed with 0.1 part by weight of mineral oil and 10 parts by weight of $NaBH_4$ powder, that was previously dried at 100°C for 8 hours. The resultant dry blended mixture was then extruded at about 450°F (232°C) and pelletized as described in the previous example. The concentrate pellets were equivalent to the pellets of Preparation A.

Preparation C

Sodium borohydride was concentrated in polystyrene using the following procedure. Ninety parts by weight of previously dried high impact polystyrene pellets was blended with 0.1 part of mineral oil and 10 parts by weight of dry $NaBH_4$ powder. The resultant mixture was then extruded at about 450°F (232°C) and pelletized as described in Preparation A. As in Preparation A, an excellent dispersion of minute particles of $NaBH_4$ in the resin was produced with virtually no gas bubbles observed.

Activating agent concentrates
Preparation D

An activating agent concentrate was prepared by the following procedure. 28.6 parts by weight of CAB-O-SIL fumed silica was intensively mixed with 71 parts by weight of a solution (65% solids) of polyacrylic acid in water for five minutes with use of a Henschel mixer. The resultant mixture was a "dry" free flowing powder.

Preparation E

The procedure described in Preparation D was also used to prepare an activator concentrate containing 71.4 parts by weight of water. The water was added slowly to 28.6 parts by weight of CAB-O-SIL fumed silica while mixing. The concentrate handled as a "dry" powder.

Example 1 (Comparative)

Foamed polypropylene structural parts were prepared by the following procedure. Blends of undried polypropylene resin powder, sodium borohydride (SBH), powdered stearic acid and CAB-O-SIL were prepared in a Henschel Mixer. Stearic acid functioned as the activator and CAB-O-SIL as the nucleating agent for bubble formation in this system. This system was limited to 1% of stearic acid activator due to the limited solubility of the acid in the solid resin and because the lubricity in the barrel of the extruder provided by the molten stearic acid causes slippage of the screw. Although good foams were prepared with good density reduction, stearic acid and other fatty acids are less than ideal activators because of the above mentioned factors. In any event, structural foam parts of good quality were produced on a reciprocating screw L/D 16:1, 100 ton, 141.75 gram injection moulding machine equipped with a cut-off nozzle. The compositions shown in Table I were so produced. All percentages are based on the weight of polypropylene resin.

TABLE I

| SBH % | Fumed silica % | Stearic acid % | % Wt. reduction of part due to foam |
|---|---|---|---|
| 0.06 | 0.1 | 1.0 | 20.2 |
| 0.13 | 0.1 | 1.0 | 27.3 |
| 0.25 | 0.1 | 1.0 | 34.4 |
| 0.5 | 0.1 | 1.0 | 37.3 |
| 1.0 | 0.1 | 1.0 | 33.7 |

Example 2

Foamed polystyrene structural parts were prepared by the following procedure. Polystyrene resin powder, the sodium borohydride concentrate prepared in Preparation C, and either the activator of Preparation D or Preparation E were blended in the proportion shown in Table II. All percentages are based upon the weight of the resin.

TABLE II

| % Conc. of preparation C NaBH$_4$ chemical blowing agent | % Conc. of preparation E H$_2$O activator | % Conc. of preparation D polyacrylic acid activator | % Part wt. reduction |
|---|---|---|---|
| 1 | 0.56 | | 16 |
| 1 | 0.28 | | 15.1 |
| 2 | 0.28 | | 18.4 |
| 4 | 2.24 | | 26.8 |
| 8 | 2.24 | | 25.5 |
| | | 1.15 | 14.4 |
| 1 | 0.14 | | 12 |
| 4 | 0.56 | | 23.3 |
| 25 | 0.7 | | 25.6 |

Excellent quality foams having very fine uniform pore size were produced using a structural foam injection machine. Density reductions of about 25% using only 4% of the blowing agent concentrate (0.4% NaBH$_4$) and 2.24% of the silica/water activator concentrate are unusually high and very desirable for this type of structural foam. Normally, with nitrogen injection to provide cells, density reductions of less than 20% are achieved. Moreover, the borohydride blown foam was unusually white, whereas the nitrogen blown foams have a slightly yellow cast. These activator concentrates such as water, organic acids, alcohols, etc. adsorbed on colloidal silica serve as ideal activators and nucleating agents for these systems because the activators can be premixed with blowing agent concentrates in the desired ratio with no reaction occurring. This mixture can then be blended with the resin to be foamed in the desired ratio and fed into the foaming machine to produce the foamed article.

**Claims**

1. A method of making a cellular thermoplastic resinous material from thermoplastic resin and a blowing agent characterised by preparing a mixture of (i) a thermoplastic resinous polymer, (ii) an alkali metal borohydride in the form of a powder or of a concentrate consisting essentially of 0.5 to 20.0% by weight of alkali metal borohydride, not more than 0.1% of adsorbed water, the balance being essentially inert thermoplastic resinous polymer and (iii) an effective amount of an activating agent comprising a finely divided carrier of high surface area having a proton source adsorbed upon its surface and heating said mixture until said thermoplastic resin is in molten condition so as to hydrolyse said alkali metal borohydride with consequent foaming of said molten resin and production of a cellular structure.

2. A method as claimed in claim 1, further characterised in that said activating agent is a finely divided high surface area silica.

3. A method as claimed in claim 1 or claim 2, further characterised in that said borohydride is sodium or potassium borohydride.

4. A method as claimed in any of claims 1 to 3, further characterised in that said proton source is water, a mineral acid, a carboxylic acid, an alcohol, a sulphonic acid, polyacrylic acid or polystyrene sulphonic acid.

## Patentansprüche

1. Verfahren zur Herstellung eines zelligen thermoplastischen Harzmaterials aus einem thermoplastischen Material und einem Treibmittels, dadurch gekennzeichnet, daß eine Mischung aus (i) einem thermoplastischen Harzmaterial, (ii) Alkalimetallborhydrid in Form eines Pulvers oder eines Konzentrates bestehend aus im wesentlichen 0,5 bis 20 Gew.-% Alkalimetallborhydrid, nicht mehr als 0,1% adsorbiertem Wasser, Rest im wesentlichen inertem thermoplastischem Harzmaterial, und (iii) einer wirksamen Menge eines Aktivierungsmittels enthaltend einen feinverteilten Träger mit größer Oberfläche mit einer auf seiner Oberfläche adsorbierten Protonenquelle hergestellt und die Mischung erhitzt wird bis das thermoplastische Harz in geschmolzenem Zustand ist, um das Alkaliborhydrid zu hydrolysieren, wobei das geschmolzene Harz aufgeschäumt und eine zellige Struktur gebildet wird.

2. Verfahren nach Anspruch 1, dadurch gekennzeichnet, daß das Aktivierungsmittel ein feinverteiltes Siliciumdioxyd mit großer Oberfläche ist.

3. Verfahren nach Anspruch 1 oder 2, dadurch gekennzeichnet, daß das Borhydrid Natrium- oder Kaliumborhydrid ist.

4. Verfahren nach einem der Ansprüche 1 bis 3, dadurch gekennzeichnet, daß die Protonenquelle Wasser, eine Mineralsäure, eine Karbonsäure, ein Alkohol, eine Sulfonsäure, Polyacrylsäure oder Polystyrolsulfonsäure ist.

## Revendications

1. Procédé de production d'une matière résineuse thermoplastique cellulaire à partir d'une résine thermoplastique et d'un agent de soufflage caractérisé en ce qu'il consiste à préparer un mélange de (i) un polymère résineux thermoplastique, (ii) une borohydrure métallique alkaline sous la forme d'une poudre ou d'une concentration composée essentiellement de 0,5 à 20% par poids de borohydrure métallique alkaline, d'une teneur en eau adsorbée n'excédant pas 0,1%, le reste composé essentiellement d'un polymère résineux thermoplastique inerte et (iii) une quantité efficace d'un agent actif comprenant un support finement divisé d'une surface élevée, une source protonique étant adsorbée sur sa surface et chauffant ledit mélange jusqu'à ce que la résine thermoplastique soit fondue de manière à effectuer l'hydrolyse de ladite borohydrure métallique alkaline amenant ladite résine fondue à mousser et à produire une structure cellulaire.

2. Procédé selon la revendication 1, caractérisé de sucroît en ce que l'agent actif est une silice finement divisée d'une surface élevée.

3. Procédé selon la revendication 1 ou 2, caractérisé de surcroît en ce que ladite borohydrure est une borohydrure de sodium ou de potassium.

4. Procédé selon l'une des revendications 1 à 3, caractérisé de surcroît en ce que ladite source protonique est de l'eau, un acide minéral, un acide de carboxyle, un alcool, un acide sulfonique, un acide polyacrylique ou un acide sulfonique polystyrolène.

5